(19) Europäisches Patentamt / European Patent Office / Office européen des brevets

(11) **EP 2 294 374 B1**

(12) **EUROPÄISCHE PATENTSCHRIFT**

(45) Veröffentlichungstag und Bekanntmachung des Hinweises auf die Patenterteilung:
**18.02.2015 Patentblatt 2015/08**

(21) Anmeldenummer: **09761471.3**

(22) Anmeldetag: **10.06.2009**

(51) Int Cl.:
*G01L 1/24* *(2006.01)*       *G01D 5/353* *(2006.01)*
*G01K 11/32* *(2006.01)*      *G01B 11/16* *(2006.01)*

(86) Internationale Anmeldenummer:
**PCT/EP2009/004159**

(87) Internationale Veröffentlichungsnummer:
**WO 2009/149908 (17.12.2009 Gazette 2009/51)**

(54) **OPTISCHER DEHNUNGSSENSOR**

OPTICAL EXTENSION SENSOR

CAPTEUR OPTIQUE D ALLONGEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **12.06.2008 DE 102008027931**

(43) Veröffentlichungstag der Anmeldung:
**16.03.2011 Patentblatt 2011/11**

(73) Patentinhaber: **Hottinger Baldwin Messtechnik GmbH**
**64293 Darmstadt (DE)**

(72) Erfinder:
• **HAASE, Karl-Heinz**
  **64319 Pfungstadt (DE)**
• **KREUZER, Manfred**
  **64331 Weiterstadt (DE)**

• **GÜNTHER, Bernd**
  **76185 Karlsruhe (DE)**
• **SCHANZE, Thomas**
  **35037 Marburg (DE)**

(74) Vertreter: **Staudte, Ralph et al**
**Patentanwalt**
**Balanstrasse 57**
**81541 München (DE)**

(56) Entgegenhaltungen:
WO-A-03/038493       DE-A1-102005 030 753
US-A- 5 563 967

• **BUESTRICH R ET AL: "ORMOCERS FOR OPTICAL INTERCONNECTION TECHNOLOGY" JOURNAL OF SOL-GEL SCIENCE AND TECHNOLOGY, SPRINGER, NEW YORK, NY, US, Bd. 20, Nr. 2, 1. Februar 2001 (2001-02-01), Seiten 181-186, XP001058795 ISSN: 0928-0707**

**Beschreibung**

Die Erfindung betrifft einen optischen Dehnungssensor nach dem Oberbegriff des Patentanspruchs 1 sowie ein Messverfahren mittels eines derartigen optischen Dehnungssensors nach dem Oberbegriff des Patentanspruchs 6.

Optische Dehnungssensoren enthalten meist einen Lichtwellenleiter, in dem ein Bragg-Gitter eingeprägt ist. Zur Dehnungsmessung werden derartige Dehnungssensoren mit einem Verformungskörper fest verbunden, dessen Dehnung erfasst werden soll. Das Messprinzip derartiger Dehnungssensoren mit Bragg-Gittern beruht darauf, dass in Durchstrahlrichtung eines Lichtwellenleiters eine periodische Änderung des Brechungsindexes als sogenanntes Bragg-Gitter eingebracht wird. Dieses Bragg-Gitter wirkt wie ein frequenzselektives Filter, dessen Gitterkonstanten so gewählt sind, dass bei einem breitbandig eingestrahlten Licht ein sehr schmalbandiges Intensitätsmaximum als ein sogenannter Peak reflektiert wird. Entscheidend für die Lage des Intensitätsmaximums ist dabei die räumliche Distanz innerhalb der periodischen Abfolge der Zonen mit unterschiedlichem Brechungsindex.

Derartige Lichtwellenleiter mit Bragg-Gittern werden für den Einsatz in Messstellen als Bragg-Gitter-Sensoren vorzugsweise zur Erfassung von Dehnungen genutzt. Wird nun ein Lichtwellenleiter im Bereich der periodischen Änderung des Brechungsindexes gedehnt oder gestaucht, so verändert sich die Lage des Intensitätsmaximums als Peak in seiner Wellenlänge. Diese Verschiebung der Wellenlänge $\lambda$ lässt sich erfassen und im Sinne einer Bestimmung der Größe der verursachten Dehnung auswerten. Allerdings wird die Dehnung immer auch von der Temperatur des Verformungskörpers beeinflusst, so dass bei einer genaueren Dehnungsmessung diese Temperatur immer mitberücksichtigt werden muss.

Aus der DE 10 2005 030 753 A1 ist ein optischer Dehnungsmessstreifen bekannt, der zur mehrachsigen Dehnungsmessung unter Berücksichtigung der Umgebungstemperatur vorgesehen ist. Dazu sind drei Lichtwellenleiter in drei winkelversetzten Führungskanälen innerhalb einer Trägerfolie fixiert. Die drei Lichtwellenleiter sind als gleichartige runde Lichtleitfasern aus Glasfaserwerkstoffen mit gleichen optischen Materialeigenschaften ausgebildet, wie sie üblicherweise auch in der Telekommunikation eingesetzt werden. Diese Lichtleitfasern bestehen alle aus einem runden Faserkern, einem Fasermantel und einer diesen umgebenden Faserschutzschicht. Die Lichtzuführung erfolgt über einen gleichartigen Zuführungswellenleiter mit einem Strahlaufteilungselement. Zur Erfassung der Dehnung ist in den einzelnen Lichtwellenleitern ein Bragg-Gitter eingeprägt, das jeweils eine andere Gitterkonstante $\Lambda$ aufweist, damit für jedes Bragg-Gitter eine vorgegebene Referenz-Bragg-Wellenlänge $\lambda_{B0}$ zur Verfügung steht, die den unbelasteten Sensorzustand charakterisiert. Derartige optische Dehnungsmessstreifen werden zur Dehnungsmessung auf einen Verformungskörper appliziert, dessen Oberflächendehnung erfasst werden soll. Bei einer entsprechenden Dehnung ändert sich die Bragg-Wellenlänge proportional zur Dehnung, woraus in einem Spektrometer mit entsprechenden Fabry-Perot-Filtern / Interferometern die reflektierte Bragg-Wellenlänge $\lambda_{B1}$ ermittelt wird, die einem Wert der Dehnung entspricht. Da die Dehnung eines Verformungskörpers nicht nur von der Kraftbeaufschlagung, sondern gleichfalls auch von der Temperatur abhängig ist, enthält der optische Dehnungsmessstreifen in seinem Zuführungswellenleiterabschnitt noch ein viertes Bragg-Gitter, das außerhalb des Verformungskörpers angeordnet ist. Durch dieses vierte Bragg-Gitter wird die temperaturabhängige Wellenlängenänderung erfasst, die zur Temperaturkompensation von der dehnungsabhängigen Wellenlängenänderung der übrigen Bragg-Gitter subtrahiert wird. Ein derartiger optischer Dehnungsmessstreifen hat den Nachteil, dass das zur Temperaturkompensation vorgesehene Bragg-Gitter zwar dicht an den übrigen Lichtwellenleitern angebracht sein muss, aber mechanisch von diesen entkoppelt ist. Derartige Dehnungsmessstreifen sind deshalb in modernen Verformungskörpern aus Kohlenfaserwerkstoffen nicht zu integrieren.

Eine optische Wellenleitervorrichtung mit eingebautem temperaturkompensierten Bragg-Gitter ist aus der EP 0 507 877 B1 bekannt. Dabei wird der Lichtwellenleiter mit dem Bragg-Gitter linear zwischen zwei Kompensationsglieder eingespannt, die unterschiedliche Wärmeausdehnungskoeffizienten aufweisen. Die beiden Materialien der Kompensationsglieder sind dabei so ausgewählt und ausgeformt, dass sich die temperaturabhängige Dehnung bei einer Kraftbelastung zwischen den beiden Materialien kompensiert, so dass nur die durch die Kraftbelastung verursachte Dehnung durch die Wellenlängenänderung erfasst wird. Dazu sind die beiden Kompensationsglieder kompliziert ausgeformt, um die temperaturbedingten Ausdehnungen kompensieren zu können. Dabei unterliegen die Kompensationsglieder auch einer geometrischen und materiellen Herstellungstoleranz, durch die die Kompensation der Wärmeausdehnung nachteilig beeinflusst werden kann, so dass Temperaturschwankungen in der Praxis nicht immer ganz auszugleichen sind.

Aus der EP 0 713 084 B1 ist ein optisches Mikrosystem des Typs Rosettenspannungslehre mit dielektrischen Leitern zur Messung der longitudinalen Spannung in Planarstrukturen bekannt, bei dem Temperaturschwankungen auf mathematische Weise berücksichtigt werden. Dazu ist eine Rosettenspannungslehre mit dielektrischen Leitern vorgesehen, die als optische Fasern ausgebildet sind, wie sie üblicherweise zum Messen von Dehnungen unbekannter Richtung eingesetzt werden. Dabei enthält die optische Faser oder die drei optischen Fasern drei Bragg-Gitter unterschiedlicher charakteristischer Wellenlängen, die vorzugsweise um 120° oder 45° gegeneinander versetzt sind, wobei die Rosette nur einer Längsspannung vorbestimmter Richtung ausgesetzt wird. Dabei sind alle optischen Lichtwellenleiter identisch ausgebildet und verfügen über denselben Wärmeausdehnungskoeffizienten. Zur besseren Applikation sind alle Bragg-Gitter mit dem sie verbindenden Lichtwellenleiter auf einer Trägerfolie aus einem elastischen Kunststoff fixiert. Wird nun diese Trägerfolie einer Längsspannung ausgesetzt, werden die reflektierten Wellenlängen der drei Bragg-Gitter in einer Auswertevorrichtung erfasst und die Differenz zu ihrer unbelasteten Referenzwellenlänge errechnet. Dazu muss mindestens ein Verformungskoeffizient bekannt sein, der die Wellenlänge mit der Verformung bei einer vorgegebenen Temperatur verknüpft, sowie der Wärmeausdehnungskoeffizient des Verformungskörpers. Des Weiteren müssen auch noch die Winkelabstände der Rosetten-Lichtwellenleiter und der Ausrichtungswinkel der Rosette zur Hauptspannungsrichtung bekannt sein. Mithilfe der vorbekannten temperatur- und winkelabhängigen Faktoren und der gemessenen Reflektionswellenlängen in den drei Bragg-Gittern kann mit einem Gleichungssystem daraus die temperaturunabhängige Längsspannung errechnet werden. Dabei lag der Erfindung die Erkenntnis zugrunde, dass sich die Temperatureffekte durch die Spannungsmessungen in verschiedenen Spannungsrichtungen der Rosette mathematisch kompensieren lassen. Allerdings müssen bei der Verwendung derartiger optischer Rosetten zur Dehnungsmessung vorab eine Reihe von Material-Koeffizienten des Verformungskörpers bekannt sein, die in der Praxis von den tatsächlichen Werten abweichen können. Des Weiteren gehen in die drei Dehnungsberechnungen Winkelangaben ein, die Toleranzen aufweisen, die insbesondere bei der Mikroausführung der Rosette zu einem Messfehler der errechneten Linearspannung führen können.

Der Erfindung liegt daher die Aufgabe zugrunde, einen optischen Dehnungssensor mit Bragg-Gittern zu schaffen, mit dessen Hilfe auf einfache Weise eine genaue, möglichst temperaturunabhängige Dehnungsmessung möglich ist. Diese Aufgabe wird durch die im Patentanspruch 1 und 6 angegebene Erfindung gelöst. Weiterbildungen und vorteilhafte Ausführungsbeispiele der Erfindung sind in den Unteransprüchen angegeben.

Die Erfindung hat den Vorteil, dass bei dem erfindungsgemäßen optischen Dehnungssensor mit den zwei unterschiedlichen Lichtwellenleitern in thermo-mechanisch harter Kopplung, durch ein einfaches Rechenverfahren die temperaturunabhängige Dehnung ermittelbar ist. Dazu sind lediglich zwei Bragg-Gitter in den zwei optischen Lichtleitermaterialien mit unterschiedlichem Temperaturkoeffizienten des Brechungsindex notwendig, deren Materialienkonstanten vorbestimmbar sind, so dass aus zwei erfassten reflektierten Wellenlängenpeaks und mittels einer einfachen Rechenschaltung in einer Auswertevorrichtung vorteilhafterweise die gesuchte belastungsabhängige Dehnung errechenbar ist, ohne dass es auf die jeweilige Messstellentemperatur ankommt. Im einfachsten Falle können dazu vorteilhafterweise zwei parallele Wellenleiter-Abschnitte mit unterschiedlichen optischen Materialeigenschaften eingesetzt werden, die längs der Belastungsrichtung ausgerichtet sind. Da eine derartige Dehnungsmessung mit einfachen linearen optischen Dehnungssensoren ausführbar ist, bei denen lediglich die konstanten optischen Materialeigenschaften bekannt sein müssen, kommt es bei der Auswertung nur auf die Messgenauigkeit der beiden reflektierten Lichtwellenlängen an, so dass vorteilhafterweise mit den erfindungsgemäßen optischen Dehnungssensoren hohe Messgenauigkeiten erzielbar sind.

Die Erfindung hat weiterhin den Vorteil, dass eine temperaturunabhängige Dehnungsmessung mit einem sehr einfach herstellbaren optischen Dehnungssensor ausführbar ist, der durch die harte thermo-mechanische Kopplung der beiden Wellenleiterabschnitte auch leicht in dehnungsempfindlichen Werkstoffen integrierbar ist oder auf vorgesehenen Verformungskörpern auf einfache Art in Dehnungsrichtung appliziert werden kann.

Eine besondere Ausführung der Erfindung mit Lichtwellenleiter-Abschnitten aus einem Ormocer®-Kunststoff hat den Vorteil, dass damit auf einfache Weise optische Wellenleiterabschnitte in unterschiedlichen geometrischen Formen und mit unterschiedlichen optischen Materialeigenschaften auf einem gemeinsamen Träger ausgebildet werden können, dessen Materialkonstanten bekannt oder vorgebbar sind. Dabei sind vorzugsweise gleichzeitig auch die Trägerfolie und die Abdeckfolie aus Ormocer®-Kunststoffen mit vorgegebenem Brechungsindex herstellbar, so dass derartige optische Dehnungssensoren sehr einfach und kompakt ausführbar sind. Durch die vorgebbaren optischen Materialkonstanten können derartige Dehnungssensoren leicht zur Verwendung auf Verformungskörpern aus Stahl, Aluminium und Titan ausgelegt werden.

Das erfindungsgemäße Verfahren mit den einfachen thermo-mechanisch gekoppelten optischen Dehnungssensoren hat den Vorteil, dass die zu ermittelnde belastungsabhängige Dehnung mittels eines einfachen Rechenverfahrens und der Messung von nur zwei Bragg-Gitter-Wellenlängen möglich ist, ohne dass die Temperatur bei den Messungen bekannt oder konstant sein müsste.

Dazu sind vorteilhafterweise auch nur eine vorbekannte Spektrometer-Vorrichtung und eine elektronische Auswertevorrichtung notwendig, wobei in der Auswertevorrichtung auf einfache Weise die vorgesehenen Materialkonstanten ($K_E$, $K_T$) sowie die Bragg-Gitter-Konstanten (n, A) durch Einstellglieder eingebbar sind. Durch ein derartiges Auswerteverfahren ist auch ein sehr genaues Messergebnis ermittelbar, weil die vorgesehenen Materialkonstanten und Bragg-Gitter-Konstanten weitgehend linear ins Messergebnis eingehen und die vorbekannten bzw. vorgegebenen Konstanten kaum fertigungsbedingte Toleranzen aufweisen.

Eine besondere Ausführung des Auswerteverfahrens hat noch den Vorteil, dass mit einem derartigen erfindungsgemäßen optischen Dehnungssensor nicht nur die Dehnung temperaturunabhängig, sondern auch nur die Temperatur dehnungsunabhängig oder neben der Dehnung zusätzlich auch noch die Verformungskörpertemperatur ermittelt werden kann.

Die Erfindung wird anhand eines Ausführungsbeispiels, das in der Zeichnung dargestellt ist, näher erläutert. Es zeigen:

Fig. 1: eine Draufsicht auf einen optischen Dehnungssensor;

Fig. 2: eine Schnittdarstellung durch die Draufsicht des optischen Dehnungssensors, und

Fig. 3: ein Blockschaltbild einer Messkette mit einem optischen Dehnungssensor.

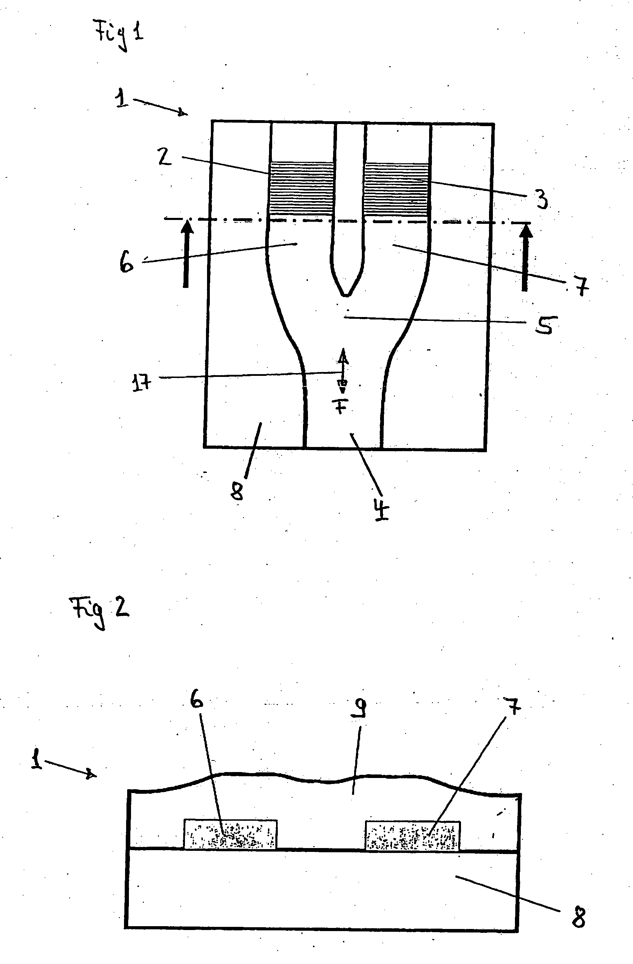

In Fig. 1 der Zeichnung ist ein optischer Dehnungssensor 1 mit zwei Lichtwellenleitern 6, 7 auf einer Trägerfolie 8 dargestellt, wobei die Lichtwellenleiter 6, 7 unterschiedliche opto-thermo-mechanische Materialeigenschaften ($K_E$, $K_T$, n) aufweisen und in sie jeweils ein Bragg-Gitter 2, 3 mit unterschiedlicher Gitterkonstante ($\Lambda$) eingeprägt ist.

Der optische Dehnungssensor 1 enthält eine planare Trägerfolie 8 zur Fixierung der beiden Lichtwellenleiter 2, 3, die vorzugsweise aus einem Kunststoff wie z.B. Polyamid besteht. Die Trägerfolie kann aber auch aus anderen Kunststoffen, Metallen, Glas oder Keramik hergestellt werden. Die Trägerfolie 8 dient dabei hauptsächlich dazu, den optischen Dehnungssensor 1 auf einem vorgesehenen Verformungskörper zu applizieren oder in einem belastbaren Bauelement positionsgerecht und kraftschlüssig zu integrieren. Die Trägerfolie 8 ist planar ausgebildet und besitzt vorzugsweise eine quadratische oder rechteckige Form mit Kantenlängen von 2 bis 15 mm und einer Dicke von 0,2 bis 0,8 mm. Die Grundfläche richtet sich im Wesentlichen nach der Länge der Bragg-Gitter 2, 3 in den Lichtwellenleitern 6, 7 und der Ausbildung des Dehnungssensors 1 für eine ein- oder mehrachsige Dehnungserfassung. Bei dem dargestellten Ausführungsbeispiel ist lediglich eine einachsige Dehnungserfassung in Längsrichtung 17 vorgesehen, so dass die Trägerfolie 8 rechteckig ausgebildet ist und vorzugsweise eine Länge von 12 mm und eine Breite von 5 mm aufweist.

Zur Dehnungserfassung ist auf der Trägerfolie 8 ein linearer Zuführungslichtwellenleiter 4 aufgebracht, der sich nach einer Strahlaufteilung 5 in zwei parallele lineare Lichtwellenleiter 6, 7 bzw. Lichtwellenleiterabschnitte 6, 7 teilt. Die Lichtwellenleiter 6, 7 besitzen vorzugsweise einen rechteckigen Querschnitt, in den jeweils ein Faser-Bragg-Gitter 2, 3 eingeprägt ist. Die Anordnung und Ausprägung der beiden Lichtwellenleiter 6, 7 ist im Einzelnen aus der Schnittdarstellung in Fig. 2 der Zeichnung ersichtlich. Dabei besitzen die beiden Lichtwellenleiter 6, 7 vorzugsweise eine Breite von ca. 0,35 mm und eine Höhe von ca. 0,15 mm. Die Lichtwellenleiter 6, 7 bestehen dabei vorzugsweise aus einem lichtdurchlässigen Kunststoff, der einfach in strukturierbaren Schichten mit definierten optischen Eigenschaften ausführbar ist.

Ein derartiger Kunststoff wird unter dem Markennamen Ormocer® vertrieben und besteht aus hybriden polymeren Werkstoffen, die insbesondere nach dem Sol-Gel-Verfahren synthetisiert werden. Dabei wird durch eine gesteuerte Hydrolyse und Kondensation von organisch modifizierten Silizium-Alkoxiden zunächst ein anorganisches Netzwerk aufgebaut. Eine Kokondensation mit anderen Metallalkoxiden (Titan, Aluminium-Alkoxide) ist ebenfalls möglich.

Aus diesem Kunststoff lassen sich funktionelle Schichten mit bestimmter mechanischer Beständigkeit und niedrigen optischen Verlusten und beliebigen Ausformungen herstellen. Deshalb wird auf die Trägerfolie 8 zunächst eine bestimmte Menge optisch gut leitfähiges Ormoce® zur Ausbildung der Lichtwellenleiterbahnen 4, 5, 6, 7 aufgetragen, das mit einem Stempel in die endgültige Form gebracht wird. Der Stempel ist dabei als Negativform der aufzuprägenden Lichtwellenleiterstruktur mit dem Zuführungslichtwellenleiter 4, der Strahlaufteilung 5 und den beiden parallelen linearen Lichtwellenleitern 6, 7 ausgeformt. In einem Prägeprozess formt der Stempel die Lichtwellenleiterstruktur auf der Trägerfolie 8 aus, wobei die Leiterstruktur durch UV-Strahlung aushärtbar ist und fest auf der Trägerfolie 8 haftet. Zum Ausformen wird dann der Prägestempel entfernt, so dass die Leiterstruktur fest auf der Trägerfolie 8 fixiert ist. Dabei können auch andere Leiterstrukturen ausgeformt werden wie z.B. zwei durchgehende parallele lineare Lichtwellenleiter.

Durch eine vorgegebene Dotierung der Schichten lassen sich eine bestimmte optische Leitfähigkeit und ein vorgebbarer Brechungsindex n der Lichtwellenleiter 4, 5, 6, 7 herstellen. Dabei ist bei diesen Lichtwellenleitern 4, 5, 6, 7 insbesondere vorgesehen, dass diese mindestens in ihren parallelen Zweigen der beiden Lichtwellenleiterabschnitte 6, 7 im Bereich der Bragg-Gitter 2, 3 unterschiedliche Temperaturkoeffizienten der Brechungsindizes $n_1$, $n_2$ aufweisen. Die vorgesehenen Temperaturkoeffizienten der Brechungszahlen $n_1$, $n_2$ können durch unterschiedliche Mischungsverhältnisse oder durch eine Nachbehandlung eingestellt werden. Dabei können die unterschiedlichen Temperaturkoeffizienten der Brechungszahlen $n_1$ oder $n_2$ in praktischen Versuchen ermittelt oder überprüft werden. Vorzugsweise können dazu die Brechungszahlen mittels eines Refraktometers direkt gemessen werden, wobei dabei dann in Abhängigkeit unterschiedlicher Temperatureinflüsse die Brechungszahlen zu ermitteln sind. Aus den temperaturabhängigen Werten können dann die unterschiedlichen Temperaturkoeffizienten abgeleitet werden.

In jedem Fall müssen die Brechungszahlen $n_1$, $n_2$ der Lichtwellenleiter 6, 7 höher sein als die der Trägerfolie 8 und deren Abdeckung 9, um eine Lichtleitfähigkeit wie bei einem herkömmlichen Glasfaser-Lichtwellenleiter zu erreichen. Deshalb wird vorzugsweise auch die Trägerschicht 8 aus einer Ormoce®-Folie mit entsprechend niedriger Brechungszahl $n_3$ ausgeführt.

Mit einem gleichartigen Kunststoff wird auch die Lichtwellenleiterstruktur nach oben mit einer Abdeckfolie 9 abgedeckt, deren Struktur ebenfalls durch einen entsprechenden Stempel herstellbar ist. Mit dem Einprägeprozess der Lichtwellenleiterstruktur können gleichzeitig auch die beiden Bragg-Gitter 2, 3 eingeprägt werden. Dazu werden in jeden der beiden Lichtwellenleiter 6, 7 parallele streifenförmige Unregelmäßigkeiten im Abstand A eingeprägt, die dann als Bragg-Gitter 2, 3 wirken. Diese können auch kammartige Erhebungen oder auch Vertiefungen darstellen, die auf einer Länge von 3 bis 10 mm ein Bragg-Gitter 2, 3 bilden, das die eingespeisten Lichtwellen mit einer vorgegebenen Wellenlänge $\lambda_{B01}$, $\lambda_{B02}$ reflektiert. Andererseits können auf der Trägerfolie 8 auch zwei lineare herkömmliche Glasfaser-Lichtleiter mit unterschiedlichen Temperaturkoeffizienten der Brechungszahlen $n_1$, $n_2$ parallel nebeneinander fixiert werden, in die jeweils ein Bragg-Gitter eingeprägt ist. Die beiden unterschiedlichen Lichtwellenleiterabschnitte könnten auch zu einem durchgehenden Lichtwellenleiter verbunden werden.

Durch ein derartiges Herstellungsverfahren mit zwei Lichtwellenleitern 6, 7 unterschiedlicher Temperaturkoeffizienten der Brechungszahlen $n_1$, $n_2$ und dem umgebenden Träger- 8 und Abdeckungsmaterial 9 mit einer niedrigeren Brechungszahl $n_3$ wird ein Dehnungssensor 1 geschaffen, mit dem erfindungsgemäß eine temperaturunabhängige Dehnungsmessung erfolgen kann. Denn bei einer Zuführung eines breitbandigen Lichtstrahls im Zuführungslichtwellenleiter 4 wird durch die Strahlaufteilung 5 gleichfalls in jeden der beiden Lichtwellenleiter 6, 7 ein derartiger Lichtstrahl eingeleitet. Durch die Bragg-Gitter 2, 3 wird ein Teil des Lichtstrahls mit bestimmter Wellenlänge $\lambda_{B1}$, $\lambda_{B2}$ in Form eines Lichtpeaks reflektiert. Dabei ergibt sich für jedes Bragg-Gitter 2, 3 im unbelasteten Zustand eine Reflektionswellenlänge $\lambda_{B0}$ nach der Formel $\lambda_{B0} = 2n \cdot \Lambda$, wobei n der Brechungsindex des Lichtwellenleiters 6, 7 im Bereich des Bragg-Gitters 2, 3 und $\Lambda$ die Gitterkonstante des jeweiligen Bragg-Gitters 2, 3 ist.

Der Kern der Erfindung besteht bei den vorliegenden optischen Dehnungssensoren darin, in einem Dehnungssensor zwei thermisch-mechanisch gekoppelte Lichtwellenleiter 6, 7 mit unterschiedlichen materialabhängigen Temperaturkoeffizienten der Brechungsindizes $n_1$ und $n_2$ im Bereich der Bragg-Gitter 2, 3 vorzusehen. Im dehnungslosen Zustand ergeben sich zwei unterschiedliche Reflektionswellenlängen nach der Funktion:

$$\lambda_{B01} = 2n_1 \cdot \Lambda_1;$$

$$\lambda_{B02} = 2n_2 \cdot \Lambda_2,$$

die sowohl von den unterschiedlichen Gitterkonstanten $\Lambda_1$ und $\Lambda_2$ als auch von den unterschiedlichen Temperaturkoeffizienten der Brechungsindizes $n_1$ und $n_2$ abhängen. Dadurch ergibt sich ein Dehnungssensor, mit dem eine Dehnung eines Verformungskörpers temperaturunabhängig erfassbar ist. Denn üblicherweise war bisher nicht eindeutig feststellbar, welcher Dehnungsanteil von einer temperaturabhängigen Dehnung und welcher Anteil von einer belastungsabhängigen Dehnung verursacht wurde, denn die Bragg-Gitter-Wellenlänge $\lambda_B$ shiftet als Funktion der Dehnung $\varepsilon$ und der Temperaturänderung $\Delta T$ nach der Beziehung:

$$\frac{\Delta\lambda_B}{\lambda_{B0}} = K_E \cdot \varepsilon + K_T \cdot \Delta T.$$

Dabei entspricht:

$\lambda_{B0}$ = Bragg-Gitter-Wellenlänge im dehnungslosen Zustand;
$K_E$ = der Empfindlichkeitsfaktor der Dehnung;
$\varepsilon$ = die Dehnung;
$K_T$ = der Empfindlichkeitsfaktor der Temperatur und
$\Delta T$ = die Temperaturänderung.

Da man nach der vorstehenden Beziehung allerdings nicht zwischen der temperatur- und belastungsbedingten Bragg-Wellenlängenänderung $\Delta\lambda_B$ unterscheiden kann und eine gleichbleibende Temperaturkonstanz nicht immer einhaltbar ist, liegt der Erfindung die Erkenntnis zugrunde, dies durch einen thermo-mechanisch hart gekoppelten zweiten Lichtwellenleiterabschnitt 6, 7 mit unterschiedlichen optischen Materialeigenschaften zu erreichen. Denn das von einem Bragg-Gitter 2, 3 reflektierte Licht der Wellenlänge $\lambda_B$ wird nicht nur von der Dehnung $\varepsilon$ und der Temperatur T beeinflusst, sondern hängt auch von den Materialeigenschaften der Lichtwellenleiter 6, 7 ab, die den Brechungsindex n mitbestimmen. Somit konnten durch zwei thermo-mechanisch hart gekoppelte Bragg-Gitter-Wellenleiterabschnitte 6, 7 mit vorbekannten aber unterschiedlichen Materialeigenschaften die Dehnungs- und die Temperaturbeeinflussung arithmetisch getrennt und damit separiert voneinander ermittelt werden. Denn bei einer belastungs- und thermoabhängigen Dehnung der hart gekoppelten Bragg-Gitter-Wellenleiterabschnitte 6, 7 sind zwei verschiedene Wellenlängenänderungen $\Delta\lambda_{B1}$ und $\Delta\lambda_{B2}$ gegenüber dem dehnungslosen Zustand $\lambda_{B01}$, $\lambda_{B02}$ des optischen Dehnungssensors 1 erfassbar, die sich nach folgenden Funktionen:

$$\frac{\Delta\lambda_{B1}}{\lambda_{B01}} = K_{E1} \cdot \varepsilon_1 + K_{T1} \cdot \Delta T_1$$

und

$$\frac{\Delta\lambda_{B2}}{\lambda_{B02}} = K_{E2} \cdot \varepsilon_2 + K_{T2} \cdot \Delta T_2$$

ergeben. Durch die thermo-mechanisch harte Kopplung der beiden Lichtwellenleiterabschnitte 6, 7 entspricht dabei die erfasste wirksame Dehnung $\varepsilon_1 = \varepsilon_2 = \varepsilon$ und die Temperaturänderung $\Delta T_1 = \Delta T_2 = \Delta T$, so dass aus den beiden oben genannten Funktionen mithilfe einer Determinantenberechnung sowohl die gemeinsame Dehnung $\varepsilon$ als auch die gemeinsame Temperaturänderung $\Delta T$ bei verschiedenen Wellenlängenmessungen nach folgenden Formeln:

$$\varepsilon = \frac{a_1 \cdot K_{T2} - a_2 \cdot K_{T1}}{K_{E1} \cdot K_{T2} - K_{E2} \cdot K_{T2}}$$

mit $\quad a_i = \dfrac{\Delta\lambda_{Bi}}{\lambda_{B0i}} \quad ; \quad$ i = 1, 2 und

$$\Delta T = \frac{a_1 \cdot K_{E2} - a_2 \cdot K_{E1}}{K_{E1} \cdot K_{T2} - K_{E2} \cdot K_{T2}}$$

errechenbar ist. Aus den vorstehenden mathematischen Funktionen ist erkennbar, dass mit einem derart gekoppelten optischen Dehnungssensor zumindest eine temperaturkompensierte Ermittlung der gemeinsamen Dehnung oder die dehnungskompensierte Temperaturänderung errechenbar ist, sofern die optischen Materialkonstanten bezüglich der Dehnungsempfindlichkeit $K_E$ und der Temperaturempfindlichkeit $K_T$ bekannt sind. Diese sind aber z.B. für die Temperaturempfindlichkeit aus den Referenzwellenlängen $\lambda_{B01}$ und $\lambda_{B02}$ für die reflektierte Wellenlänge der Bragg-Gitter im dehnungsfreien Zustand ableitbar, die sich nach den Funktionen

$$\frac{\Delta\lambda_{B1}}{\Delta\lambda_{B01}} = K_{T1} \cdot \Delta T_1$$

und

$$\frac{\Delta\lambda_{B2}}{\Delta\lambda_{B02}} = K_{T2} \cdot \Delta T_2$$

bestimmen lassen.

Dabei sind mindestens die Gitterkonstanten $\Lambda$ zur Einprägung der Bragg-Gitter 2, 3 vorgegeben, so dass nach Durchlaufen unterschiedlicher Temperaturniveaus $\Delta T$ durch Messung der Referenzwellenlänge $\lambda_{B0}$ rechnerisch auf den Temperaturkoeffizienten des Brechungsindex n geschlossen werden kann, sofern dieser nicht schon bei der Herstellung der Lichtwellenleiter vorgegeben wird. Da weiterhin bekannt ist, dass sich die Wellenlängenänderung $\Delta\lambda_B$ proportional zur Längendehnung des Bragg-Gitters 2, 3 verhält, ergibt sich wegen des linearen Zusammenhangs der Empfindlichkeitsindizes $K_E$, $K_T$ und der relativen Wellenlängenänderung $\dfrac{\Delta\lambda_B}{\lambda_{B0}}$ im Dehnungsfall, so dass sich im Fall kombinierter Beanspruchung durch eine Dehnungs- und Temperaturänderung diese aus dem Gleichungssystem:

$$\varepsilon = \frac{a_1 \cdot K_{T2} - a_2 \cdot K_{T1}}{K_{E1} \cdot K_{T2} - K_{E2} \cdot K_{T2}}$$

mit $\quad a_i = \dfrac{\Delta\lambda_{Bi}}{\lambda_{B0i}} \quad ; \quad$ i = 1, 2 und

$$\Delta T = \frac{a_1 \cdot K_{E2} - a_2 \cdot K_{E1}}{K_{E1} \cdot K_{T2} - K_{E2} \cdot K_{T2}}$$

ergibt.

Daraus folgt die Erkenntnis, dass mit einer Messkette zur Erfassung der beiden reflektierten Wellenlängen $\lambda_{B1}$ und $\lambda_{B2}$ mit dem Dehnungssensor 1 und einem Spektrometer 11 sowie einer elektronischen Auswertevorrichtung 10 unter Berücksichtigung der Materialkonstanten mindestens die temperaturkompensierte Dehnung an oder in einem Verformungskörper errechenbar ist.

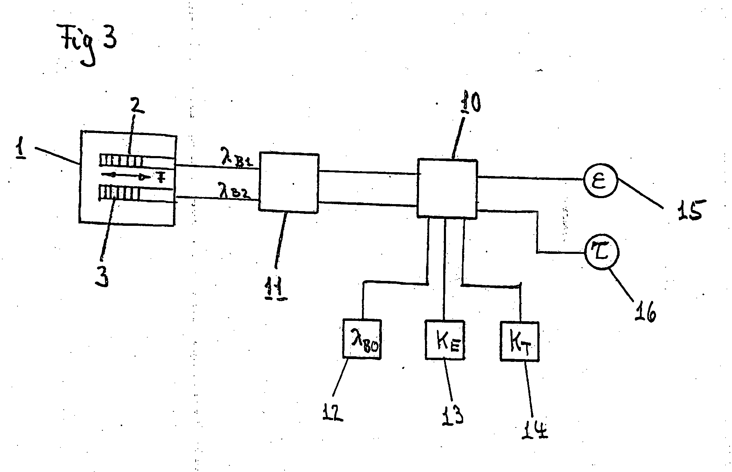

Eine derartige Messkette ist im Einzelnen in Fig. 3 der Zeichnung dargestellt, die einen optischen Dehnungssensor 1, ein Spektrometer 11, eine Auswertevorrichtung 10, ein Referenzwellenlängeneinstellglied 12, ein Dehnungsempfindlichkeitseinstellglied 13, ein Temperaturempfindlichkeitseinstellglied 14, eine Temperatur-16 und eine Dehnungsanzeige 15 enthält.

Bei einer Dehnungsmessung des optischen Dehnungssensors 1 wird zunächst mithilfe eines Fabry-Pérot-Detektors als Spektrometer 11 die aus den beiden Bragg-Gittern 2, 3 reflektierte gemessene Wellenlänge $\lambda_{B1}$ und $\lambda_{B2}$ detektiert. In der Auswertevorrichtung 10 wird nun die Differenz aus den vorgegebenen Referenz-Bragg-Wellenlängen $\lambda_{B01}$ und $\lambda_{B02}$ und den gemessenen beiden Wellenlängen $\lambda_{B1}$ und $\lambda_{B2}$ nach den Funktionen

$$\Delta\lambda_{B1} = \lambda_{B01} - \lambda_{B1}$$

und

$$\Delta\lambda_{B2} = \lambda_{B02} - \lambda_{B2}$$

gebildet, so dass man mit $\Delta\lambda_{B1}$ und $\Delta\lambda_{B2}$ einen Wert erhält, der der Dehnung $\varepsilon$ bzw. dem Belastungswert F und der Temperaturdehnung $\Delta T$ proportional ist. Dazu wurden die Referenzwellenlängen $\lambda_{B01}$ und $\lambda_{B02}$ der Auswertevorrichtung 10 durch das Referenzwellenlängeneinstellglied 12 vorgegeben. Da die Empfindlichkeitsfaktoren für die Dehnung $K_E$ und für die Temperatur $K_T$ sich weitgehend aus den Funktionen:

$$\frac{\Delta\lambda_{B1}}{\lambda_{B01}} = K_{E1} \cdot \varepsilon_1 + K_{T1} \cdot \Delta T_1$$

$$\frac{\Delta\lambda_{B2}}{\lambda_{B02}} = K_{E2} \cdot \varepsilon_2 + K_{T2} \cdot \Delta T_2$$

mit den gewählten Temperaturkoeffizienten der Brechungsindizes $n_1$ und $n_2$ und den bekannten Gitterkonstanten $\Lambda_1$ und $\Lambda_2$ ergeben, kann in der Auswertevorrichtung 10 die belastungsrelevante Dehnung $\varepsilon$ nach der vorstehend entwickelten Funktion:

$$\varepsilon = \frac{a_1 \cdot K_{T2} - a_2 \cdot K_{T1}}{K_{E1} \cdot K_{T2} - K_{E2} \cdot K_{T2}}$$

mit $a_i = \dfrac{\Delta\lambda_{B1}}{\lambda_{B0i}}$ ; i = 1, 2

errechnet werden.

Aus der vorstehenden Funktion ist ersichtlich, dass sich die temperaturabhängige Dehnung an einem Verformungskörper offensichtlich kompensieren lässt, wenn man zwei unterschiedliche dehnungsempfindliche Lichtwellenleiter 6, 7 mit Bragg-Gittern 2, 3 thermo-mechanisch starr miteinander koppelt. Dazu ist dann nur notwendig, dass die Konstanten $K_{E1}$ und $K_{E2}$ und $K_{T1}$ und $K_{T2}$ anhand der gewählten Temperaturkoeffizienten der Brechungszahlen $n_1$, $n_2$ und Gitterkonstanten $\Lambda_1$, $\Lambda_2$ ermittelt und in der Auswertevorrichtung 10 gespeichert werden. Da gleichfalls die dehnungsfreien Referenz-Bragg-Wellenlängen $\lambda_{B01}$ und $\lambda_{B02}$ aus den folgenden Funktionen:

$$\lambda_{B01} = 2n_1 \cdot \Lambda_1$$

und

$$\lambda_{B02} = 2n_2 \cdot \Lambda_2$$

bekannt oder in der Auswertevorrichtung 10 errechenbar sind, werden mittels des Referenzwellenlängeneinstellglieds 12, des Dehnungsempfindlichkeitseinstellglieds 13 und des Temperaturempfindlichkeitseinstellglieds 14 die Referenzwellenlängen $\lambda_{B01}$ und $\lambda_{B02}$ sowie die Empfindlichkeitsfaktoren $K_{E1}$, $K_{E2}$, $K_{T1}$ und $K_{T2}$ eingegeben. Dann wird in der Auswertevorrichtung 10 aus den eingegebenen Faktoren und aus den beiden gemessenen Bragg-Wellenlängen $\lambda_{B1}$ und $\lambda_{B2}$ nach der oben stehenden Formel die gesuchte Dehnung $\varepsilon$ errechnet und in der Dehnungsanzeige 15 angezeigt.

Eine derartige temperaturkompensierte Dehnungserfassung kann nicht nur bei linear beaufschlagten optischen Dehnungssensoren 1, sondern auch bei optischen Rosettendehnungsmessstreifen, die mehrere winkelversetzte Wellenleiterabschnitte mit Bragg-Gittern aufweisen, durchgeführt werden. Dabei wird lediglich zu einem dieser Bragg-Gitter-Wellenleiter-Abschnitte ein zweiter Bragg-Gitter-Wellenleiter-Abschnitt mit unterschiedlicher Brechungszahl und Gitterkonstante parallel angeordnet und mit allen thermo-mechanisch starr gekoppelt.

Mit den vorstehend beschriebenen optischen Dehnungssensoren 1 kann gleichzeitig auch die Temperaturänderung $\Delta T$ zwischen zwei Wellenlängenmessungen errechnet werden, ohne dass dabei die Messkörper-Dehnung bekannt sein müsste. Denn nach den beiden vorstehenden Grundgleichungen $\Delta\lambda_{B1}$ und $\Delta\lambda_{B2}$ kann mathematisch auch die Temperaturänderung $\Delta T$ nach folgender Formel:

$$\Delta T = \frac{a_1 \cdot K_{E2} - a_2 \cdot K_{E1}}{K_{E1} \cdot K_{T2} - K_{E2} \cdot K_{T2}}$$

mit　$a_i = \dfrac{\Delta\lambda_{Bi}}{\lambda_{B0i}}$　;　i = 1, 2

in der Auswertevorrichtung 10 separiert werden. Damit kann durch vorstehendes Rechenverfahren und aus den ermittelten Wellenlängen-Differenzen $\Delta\lambda_{B1}$, $\Delta\lambda_{B2}$ und den vorgegebenen Empfindlichkeitsfaktoren $K_{E1}$, $K_{E2}$ und $K_{T1}$, $K_{T2}$ in der Auswertevorrichtung gleichzeitig auch die Temperaturdifferenz $\Delta T$ ermittelt werden.

Ein derartiger optischer Dehnungssensor 1 könnte aber durch ein besonderes Auswerteverfahren auch nur zur Temperaturermittlung eingesetzt werden. Dabei könnte die bei einer vorbekannten Temperatur ermittelte Wellenlänge $\lambda_{B01}$ und $\lambda_{B02}$ als Referenztemperatur $T_0$ der Auswertevorrichtung 10 vorgegeben werden. Aus einer nachfolgend erfassten Wellenlängenänderung $\Delta\lambda_{B1}$ und $\Delta\lambda_{B2}$ kann dann die Temperaturänderung $\Delta T$ errechnet und zur Referenztemperatur To in der Auswertevorrichtung 10 addiert werden, um die aktuelle Temperatur T zu ermitteln.

**Patentansprüche**

1. Optischer Dehnungssensor, der eine ebene planare dünne Trägerfolie (8) enthält, auf oder in der mindestens ein erster Lichtwellenleiter (6) kraftschlüssig angeordnet ist, der mindestens einen ersten Lichtwellenleiterabschnitt mit einem ersten Bragg-Gitter (2) zur Erfassung der Dehnung ($\varepsilon$) aufweist, wobei der erste Lichtwellenleiter (6) einen bestimmten Brechungsindex ($n_1$) und das erste Bragg-Gitter (2) eine bestimmte Gitterkonstante ($\Lambda_1$) aufweist, wobei auf oder in der Trägerfolie (8) mindestens noch ein weiterer parallel angeordneter zweiter Lichtwellenleiter (7) oder Lichtwellenleiterabschnitt (7) mit einem zweiten Bragg-Gitter (3) vorgesehen ist, der mindestens mit dem ersten Lichtwellenleiter (6) bzw. Lichtwellenleiterabschnitt (6) thermo-mechanisch gekoppelt ist, wobei der zweite Lichtwellenleiter (7) mindestens einen anderen Temperaturkoeffizienten des Brechungsindex ($n_2$) als der erste Lichtwellenleiter (6) aufweist, und wobei auf oder.in der Trägerfolie (8) ein Zuführungswellenleiter (4) angeordnet ist, der eine nachfolgende Strahlaufteilung (5) aufweist, nach der die zwei parallel zueinander und linear ausgerichteten ersten und zweiten Lichtwellenleiterabschnitte (6, 7) unterschiedlicher Empfindlichkeitsfaktoren der Dehnung ($K_{E1}$, $K_{E2}$) und Empfindlichkeitsfaktoren der Temperatur ($K_{T1}$, $K_{T2}$) mit den ersten und zweiten Bragg-Gittern (2, 3) folgen.

2. Optischer Dehnungssensor nach Anspruch 1, wobei die Bragg-Gitter (2, 3) unterschiedliche Gitterkons-tanten ($\Lambda_1$, $\Lambda_2$) aufweisen.

3. Optischer Dehnungssensor nach einem der vorhergehenden Ansprüche, wobei mindestens die Lichtwellenleiterabschnitte (6, 7) mit den Bragg-Gittern (2, 3) aus einem Ormocer®-Kunststoff mit unterschiedlichem Brechungsindex ($n_1$, $n_2$) bestehen, wobei diese zwischen der Trägerfolie (8) und einer Abdeckfolie (9) angeordnet sind, die beide einen Brechungsindex ($n_3$) mit niedrigerer Brechungszahl als die Lichtwellenleiterabschnitte (6, 7) aufweisen.

4. Optischer Dehnungssensor nach Anspruch 3, wobei die Trägerfolie (8) und die Abdeckfolie (9) aus einem Ormocer®-Kunststoff mit gleichen Materialkonstanten ($K_E$, $K_T$) bestehen, dessen Materialkonstanten sich von denen der Bragg-Gitter-Abschnitte (6, 7) unterscheiden.

5. Optischer Dehnungssensor nach einem der vorhergehenden Ansprüche, wobei neben den beiden linearen Bragg-Gitter-Abschnitten (6, 7) noch mindestens zwei weitere lineare Bragg-Gitter-Abschnitte wie bei einer Rosette auf oder in der gemeinsamen Trägerfolie (8) vorgesehen sind, die vorgegebene Winkelabstände voneinander und von den beiden linearen Bragg-Gitter-Abschnitten (6, 7) aufweisen.

6. Messverfahren mit mindestens einem planaren optischen Dehnungssensor nach einem der vorhergehenden Ansprüche, der auf oder in einem Verformungskörper fixiert ist, dessen reflektierte Wellenlängen ($\lambda_{B1}$, $\lambda_{B2}$) mit einem Spektrometer (11) ermittelt werden und aus dessen Werten eine Differenz zu einer Referenz-Bragg-Wellenlänge ($\lambda_{B01}$, $\lambda_{B02}$) gebildet wird, wobei aus diesen beiden Differenz-Wellenlängen ($\Delta\lambda_{B1}$, $\Delta\lambda_{B2}$) und den beiden vorgegebenen Empfindlichkeitsfaktoren der Dehnung ($K_{E1}$, $K_{E2}$) und den beiden vorgegebenen Empfindlichkeitsfaktoren der Temperatur ($K_{T1}$, $K_{T2}$) der ersten und zweiten Lichtwellenleiterabschnitte (6, 7) mit den ersten und zweiten Bragg-Gittern (2, 3) die Verformungskörperdehnung ($\varepsilon$) und/oder die Verformungskörpertemperatur (T) in einer Auswertevorrichtung (10) errechnet wird, wobei die temperaturunabhängige Verformungskörperdehnung ($\varepsilon$) in der Auswertevorrichtung (10) nach folgender Funktion:

$$\varepsilon = \frac{a_1 \cdot K_{T2} - a_2 \cdot K_{T1}}{K_{E1} \cdot K_{T2} - K_{E2} \cdot K_{T2}}$$

mit $a_i = \dfrac{\Delta\lambda_{Bi}}{\lambda_{B0i}}$ ; i = 1, 2 errechnet wird.

**7.** Messverfahren nach Anspruch 6, wobei die dehnungsunabhängige Verformungskörper-Temperatur (T) in der Auswertevorrichtung (10) aus einer Referenztemperatur-Messung ($T_0$) bei einer vorherigen Wellenlängenmessung ($\Delta\lambda_{B1}$, $\Delta\lambda_{B2}$) und der Temperaturabweichung ($\Delta T$) bei einer nachfolgenden Messung nach der Funktion:

$$T \;=\; T_0 \;+\; \Delta T$$

ermittelt wird.

**8.** Messverfahren nach Anspruch 7, wobei die dehnungsunabhängige Temperaturabweichung ($\Delta T$) in der Auswerteschaltung (10) nach folgender mathematischer Funktion:

$$\Delta T = \frac{a_1 \cdot K_{E2} - a_2 \cdot K_{E1}}{K_{E1} \cdot K_{T2} - K_{E2} \cdot K_{T2}}$$

mit $a_i = \dfrac{\Delta\lambda_{Bi}}{\lambda_{B0i}}$ ; ; i = 1, 2 errechnet wird.

## Claims

**1.** Optical strain sensor which contains an even planar thin carrier film (8) on or in which at least a first optical wave guide (6) is arranged in a force-fitting manner, which comprises at least a first optical wave guide section provided with a first Bragg grating (2) for detecting the strain ($\varepsilon$), wherein the first optical wave guide (6) has a specific index of refraction ($n_1$) and the first Bragg grating (2) has a specific grating constant ($\Lambda_1$), wherein on or in the carrier film (8) at least another second optical wave guide (7) or optical wave guide section (7) arranged in parallel and having a second Bragg grating (3) is provided, which is thermo-mechanically coupled at least with the first optical wave guide (6) or optical wave guide section (6), wherein the second optical wave guide (7) has at least a temperature coefficient of the index of refraction ($n_2$), which is different to that of the first optical wave guide (6), and wherein a feeding wave guide (4) is arranged on or in the carrier film (8), which comprises a succeeding beam splitting-up (5) followed by the first and second optical wave guide sections (6, 7) being arranged linearly and in parallel to each other and having different sensitivity factors of strain ($K_{E1}$, $K_{E2}$) and different sensitivity factors of temperature ($K_{T1}$, $K_{T2}$) and being provided with the first and second Bragg gratings (2, 3).

**2.** Optical strain sensor according to claim 1, wherein the Bragg gratings (2, 3) have different grating constants ($\Lambda_1$, $\Lambda_2$).

**3.** Optical strain sensor according to any of the preceding claims, wherein at least the optical wave guide sections (6, 7) provided with the Bragg gratings (2, 3) are made of an Ormocer® plastic having a different index of refraction ($n_1$, $n_2$), wherein these sections are arranged between the carrier film (8) and a covering film (9), both films having an index of refraction ($n_3$) with a smaller value than that of the indexes of refraction of the optical wave guide sections (6, 7).

**4.** Optical strain sensor according to claim 3, wherein the carrier film (8) and the covering film (9) are made of an Ormocer® plastic having the same material constants ($K_E$, $K_T$) which are different to those of the Bragg grating sections (6, 7).

**5.** Optical strain sensor according to any of the preceding claims, wherein at least another two linear Bragg grating sections are provided on or in the common carrier film (8) and next to the two linear Bragg grating sections (6, 7), as with a rosette, which have predetermined angle distances from one another and from the two linear Bragg grating sections (6, 7).

**6.** Measuring method with at least one planar optical strain sensor according to any of the preceding claims, which is fixed on or in a deformation body, whose reflected wavelengths ($\lambda_{B1}$, $\lambda_{B2}$) are determined by a spectrometer (11), and a difference between whose values and reference Bragg wavelengths ($\lambda_{B01}$, $\lambda_{B02}$) is found out, wherein from the two differential wavelengths ($\Delta\lambda_{B1}$, $\Delta\lambda_{B2}$), the two predetermined sensitivity factors of strain ($K_{E1}$, $K_{E2}$) and the two predetermined sensitivity factors of temperature ($K_{T1}$, $K_{T2}$) of the first and second optical wave guide sections (6, 7) provided with the first and second Bragg gratings (2, 3) the strain of the deformation body ($\varepsilon$) and/or the temperature of the deformation body (T) is calculated in an evaluation device (10), wherein the temperature-independent strain of the deformation body ($\varepsilon$) is calculated in the evaluation device (10) by using the function as follows:

$$\varepsilon = \frac{a_1 \cdot K_{T2} - a_2 \cdot K_{T1}}{K_{E1} \cdot K_{T2} - K_{E2} \cdot K_{T2}}$$

with

$$a_i = \frac{\Delta\lambda_{Bi}}{\lambda_{B0i}} \quad ; \quad i = 1, \ 2$$

**7.** Measuring method according to claim 6, wherein the strain-independent temperature of the deformation body (T) is determined in the evaluation device (10) from a reference temperature ($T_0$) measured during a preceding measurement of wavelength ($\Delta\lambda_{B1}$, $\Delta\lambda_{B2}$) and a temperature variation (AT) determined during a succeeding measurement, by using the function as follows:

$$T = T_0 + \Delta T$$

**8.** Measuring method according to claim 7, wherein the strain-independent temperature variation ($\Delta T$) is calculated in the evaluation device (10) by using the mathematical function as follows:

$$\Delta T = \frac{a_1 \cdot K_{E2} - a_2 \cdot K_{E1}}{K_{E1} \cdot K_{T2} - K_{E2} \cdot K_{T2}}$$

with

$$a_i = \frac{\Delta\lambda_{Bi}}{\lambda_{B0i}} \quad ; \quad i = 1, \ 2$$

**Revendications**

**1.** Capteur optique d'allongement, lequel contient un film de support (8) mince, plan et plat sur lequel ou dans lequel est disposé d'une manière solidaire au moins un premier guide d'onde optique (6) qui comporte au moins une première section de guide d'onde optique pourvue d'un premier réseau de Bragg (2) pour la détection de l'allongement ($\varepsilon$), dans lequel le premier guide d'onde optique (6) présente un certain indice de réfraction ($n_1$) et le premier réseau de Bragg (2) présente une certaine constante de réseau ($\Lambda_1$),

dans lequel, sur ou dans le film de support (8), est prévu(e) dans un arrangement parallèle au moins encore un autre deuxième guide d'onde optique (7) ou une autre deuxième section de guide d'onde optique (7) pourvue d'un deuxième réseau de Bragg (3), lequel ou laquelle est thermomécaniquement couplé(e) au moins avec le premier guide d'onde optique (6) ou la première section de guide d'onde optique (6) respectivement,

dans lequel le deuxième guide d'onde optique (7) présente au moins un autre coefficient de température de l'indice de réfraction ($n_2$) que celui du premier guide d'onde optique (6), et

dans lequel, sur ou dans le film de support (8), est disposé un guide d'onde d'alimentation (4) qui présente une division de faisceau (5) suivie par les deux première et deuxième sections de guide d'onde optique (6, 7) pourvues des premier et deuxième réseaux de Bragg (2, 3), lesdites sections étant parallèles entre elles et alignées linéairement et ayant des facteurs de sensibilité de l'allongement ($K_{E1}$, $K_{E2}$) différents ainsi que des facteurs de sensibilité de la température ($K_{T1}$, $K_{T2}$) différents.

**2.** Capteur optique d'allongement selon la revendication 1, dans lequel les réseaux de Bragg (2, 3) présentent des constantes de réseau ($\Lambda_1$, $\Lambda_2$) différentes.

**3.** Capteur optique d'allongement selon l'une des revendications précédentes, dans lequel au moins les sections de guide d'onde optique (6, 7) pourvues des réseaux de Bragg (2, 3) sont en plastique Ormocer® avec un indice de réfraction ($n_1$, $n_2$) différent, dans lequel lesdites sections sont disposées entre le film de support (8) et un film de couverture (9), les deux films présentant un indice de réfraction ($n_3$) de plus faible valeur que celle des indices de réfraction des sections de guide d'onde optique (6, 7).

**4.** Capteur optique d'allongement selon la revendication 3, dans lequel le film de support (8) et le film de couverture (9) sont en plastique Ormocer® avec des constantes de matériau ($K_E$, $K_T$) identiques, lesquelles sont différentes des constantes de matériau des sections à réseaux de Bragg (6, 7).

**5.** Capteur optique d'allongement selon l'une des revendications précédentes, dans lequel sont prévues, sur ou dans le film de support (8) commun, encore au moins deux autres sections à réseaux de Bragg linéaires à côté des deux sections à réseaux de Bragg linéaires (6, 7), comme avec une rosette, lesquelles présentent des distances angulaires prédéterminées vis-à-vis l'une de l'autre et vis-à-vis des deux sections à réseaux de Bragg linéaires (6, 7).

6. Procédé de mesure avec au moins un capteur optique d'allongement planaire selon l'une des revendications précédentes, lequel est fixé sur ou dans un corps de déformation, dont les longueurs d'onde ($\lambda_{B1}$, $\lambda_{B2}$) réfléchies sont déterminées par un spectromètre (11) et à partir desquelles valeurs, une différence avec une longueur d'onde de Bragg de référence ($\lambda_{B01}$, $\lambda_{B02}$) est formée, dans lequel, à partir de ces deux longueurs d'onde différentielles ($\Delta\lambda_{B1}$, $\Delta\lambda_{B2}$) ainsi qu' à partir des deux facteurs de sensibilité de l'allongement ($K_{E1}$, $K_{E2}$) prédéterminés et des deux facteurs de sensibilité de la température ($K_{T1}$, $K_{T2}$) prédéterminés relatifs aux première et deuxième sections de guide d'onde optique (6, 7) pourvues des premier et deuxième réseaux de Bragg (2, 3), l'allongement du corps de déformation ($\varepsilon$) et/ou la température du corps de déformation (T) est calculé(e) dans un dispositif d'évaluation (10), dans lequel l'allongement du corps de déformation ($\varepsilon$) indépendant de la température est calculé dans le dispositif d'évaluation (10) selon la fonction suivante:

$$\varepsilon = \frac{a_1 \cdot K_{T2} - a_2 \cdot K_{T1}}{K_{E1} \cdot K_{T2} - K_{E2} \cdot K_{T2}}$$

avec

$$a_i = \frac{\Delta\lambda_{Bi}}{\lambda_{B0i}} \quad ; \quad i = 1, 2$$

7. Procédé de mesure selon la revendication 6, dans lequel la température du corps de déformation (T) indépendante de l'allongement est déterminée dans le dispositif d'évaluation (10), à partir d'une mesure de température de référence ($T_0$) durant une mesure précédente de longueur d'onde ($\Delta\lambda_{B1}$, $\Delta\lambda_{B2}$) et durant un écart de température ($\Delta T$) lors d'une mesure suivante, selon la fonction:

$$T = T_0 + \Delta T$$

8. Procédé de mesure selon la revendication 7, dans lequel l'écart de température ($\Delta T$) indépendant de l'allongement est calculé dans le dispositif d'évaluation (10) selon la fonction mathématique suivante:

$$\Delta T = \frac{a_1 \cdot K_{E2} - a_2 \cdot K_{E1}}{K_{E1} \cdot K_{T2} - K_{E2} \cdot K_{T2}}$$

avec

$$a_i = \frac{\Delta\lambda_{Bi}}{\lambda_{B0i}} \quad ; \quad i = 1, 2$$

Fig 1

Fig 2

Fig 3

**IN DER BESCHREIBUNG AUFGEFÜHRTE DOKUMENTE**

**In der Beschreibung aufgeführte Patentdokumente**

- DE 102005030753 A1
- EP 0507877 B1
- EP 0713084 B1